**Europäisches Patentamt**

**European Patent Office**

**Office européen des brevets**

(19)

(11) Veröffentlichungsnummer : **0 469 344 A1**

(12) # EUROPÄISCHE PATENTANMELDUNG

(21) Anmeldenummer : **91111371.0**

(51) Int. Cl.⁵ : **B27C 5/10**

(22) Anmeldetag : **09.07.91**

(30) Priorität : **28.07.90 DE 4024059**

(43) Veröffentlichungstag der Anmeldung :
**05.02.92 Patentblatt 92/06**

(84) Benannte Vertragsstaaten :
**CH DE FR GB LI**

(71) Anmelder : **ROBERT BOSCH GmbH**
**Postfach 10 60 50**
**W-7000 Stuttgart 10 (DE)**

(72) Erfinder : **Bloechle, Hans**
**Wiesenstrasse 21**
**W-7257 Ditzingen 5 (DE)**
Erfinder : **Netz, Gerhard**
**Frühlingstrasse 25**
**W-8354 Metten (DE)**

(54) **Handoberfräse.**

(57)   Eine Handoberfräse (11) mit einer mit parallelen Säulen (15) versehenen Fußplatte (14) sowie einem Antriebsaggregat (11), das an den Säulen(15) relativ zur Fußplatte (14) höhenverstellbar gehalten ist, ist mit einer Schwenkeinrichtung (21) versehen, mittels der das Antriebsaggregat (11) um eine quer zu seiner Längsmittelachse (23) gerichtete Schwenkachse (22) schwenkverstellbar und feststellbar ist. Die Schwenkeinrichtung (21) ist zwischen den Säulen (15) einerseits und der Fußplatte (14) andererseits angeordnet und weist je Säule (15) ein Schwenkgelenk (25) auf, das aus zwei miteinander zusammenspannbaren bzw. lösbaren Gelenkteilen 26, 27 besteht, die formschlüssig über Stirnzähne fixierbar sind. Dadurch sind Schrägbearbeitungen von Werkstücken (18) möglich (Fig. 2).

EP 0 469 344 A1

Fig. 2

## Stand der Technik

Die Erfindung geht aus von einer Handoberfräse nach dem gattungsbildenden Oberbegriff des Hauptanspruchs. Es ist eine Handoberfräse dieser Art bekannt (EP-OS 145 872), die mit einer als Zusatzelement anbringbaren Schwenkeinrichtung ausgestattet ist und ein Werkzeug nach Art eines Hobelkopfes aufweist. Die Schwenkeinrichtung weist eine zusätzliche Befestigungsplatte auf, die ortsfest befestig bar ist und beidseitige Schwenksegmente trägt mit darin befindlichen Bogennuten. Diese Befestigungsplatte wird über eine eine Schwenkachse bildende Stange an der Führungsplatte der Handoberfräse angebracht. In Abstand von dieser Stange ist die Fußplatte von einer weiteren Stange durchsetzt, deren Enden in die Bogennuten der Schwenksegmente eingreifen und über Distanzhülsen und Klemmhebel festklemmbar sind. Mittels dieser Schwenkeinrichtung ist die komplette Handoberfräse mit Fußplatte und Antriebsaggregat unter Beibehaltung der zueinander rechtwinkligen Ausrichtung um die eine Schwenkachse bildende Stange der Befestigungsplatte schwenkbar. Eine solche, ein Zusatzbauteil dar stellende Schwenkeinrichtung ist aufwendig und teuer. Außerdem verschwindet ein Teil des Werkzeugs jenseits der Fußplatte, so daß insbesondere kurze bzw. dünne Werkzeuge nicht mehr oder nur noch teilweise zum Eingriff in das Werkstück kommen. Ziel der Erfindung ist es, eine Handoberfräse mit einer einfachen, kostengünstigen Schwenkeinrichtung zu versorgen, die kein zusätzliches, bedarfsweise anzubringendes bauteil ist.

## Vorteile der Erfindung

Bei der erfindungsgemäßen Handoberfräse mit den kennzeichnenden Merkmalen des Hauptanspruchs ist eine Handoberfräse geschaffen, die eine einfache, kostengünstige und in die Handoberfräse integrierte Schwenkeinrichtung aufweist, welche zwischen den Säulen einerseits und der Fußplatte andererseits enthalten ist. Auf diese Weise sind das Antriebsaggregat und die Fußplatte relativ zueinander um die Schwenkachse schwenkverstellbar und feststellbar. Wird die Schwenkeinrichtung nicht benutzt, erfolgt die Einstellung der Relativlage so, daß die Längsmittelachse des An triebsaggregats rechtwinklig zur Fußplatte verläuft. Ist hingegen eine Schrägbearbeitung gewünscht, so wird durch relatives Schwenken diese Schwenklage hergestellt und gesichert, bei der die Längsmittelachse des Antriebsaggregats schräg zur Ebene der Fußplatte verläuft. Die Schwenkeinrichtung ist einfach, kostengünstig, platzsparend und leicht. Sie ermöglicht mittels des im Antriebsaggregat einspannbaren jeweiligen Werkzeuges eine Bearbeitung schräg zur Werkstück-oberfläche, z. B. eine Nutbearbeitung, Kantenbearbeitung od. dgl.. Die Schwenkeinrichtung hat dabei den Vorteil, daß die mögliche Eingriffstiefe des eingespannten Werkzeugs im Werkstück nicht verringert wird.

Durch die in den Unteransprüchen aufgeführten Maßnahmen sind vorteilhafte Weiterbildungen und Verbesserungen der im Hauptanspruch angegebenen Handoberfräse möglich. Weitere Einzelheiten und Vorteile der Erfindung ergeben sich aus der nachfolgenden Beschreibung.

## Zeichnung

Ausführungsbeipiele der Erfindung sind nachfolgend anhand der Zeichnungen näher erläutert. Es zeigen:
Fig. 1 eine schematische, teilweise geschnittene Ansicht einer Handoberfräse gemäß einem ersten Ausführungsbeispiel,
Fig. 2 einen schematischen Schnitt mit teilweiser Seitenansicht entlang der Linie II-II in Fig.1,
Fig. 3 und 4 jeweils eine Stirnansicht eines Gelenkteiles eines Schwenkgelenks der Handoberfräse,
Fig. 5 eine schematische Seitenansicht mit teilweisem Schnitt etwa entsprechend Fig. 2 einer Handoöerfräse gemäß einem zweiten Ausführungs-beispiel.

## Beschreibung der Ausführungsbeispiele

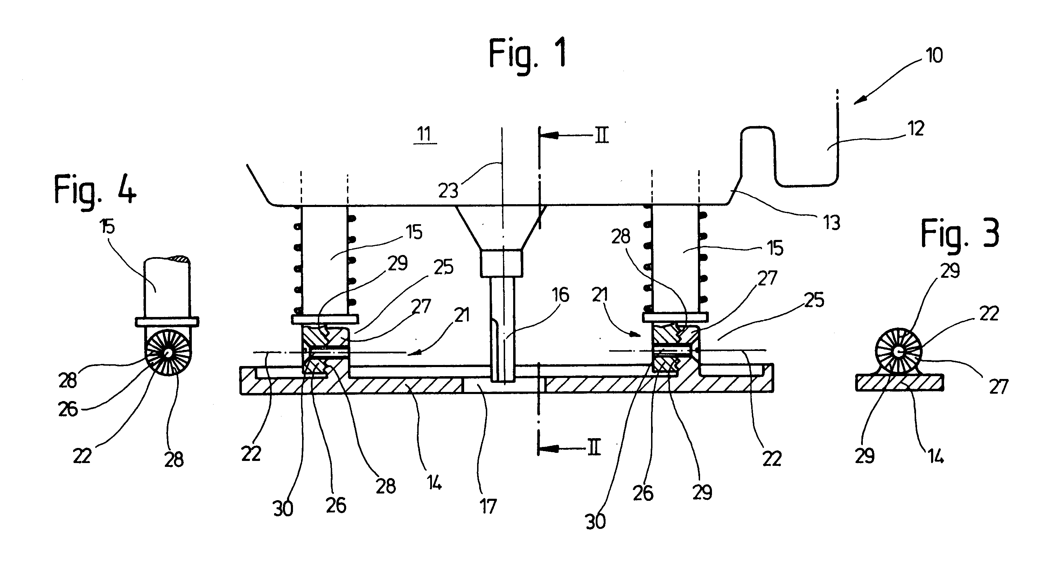

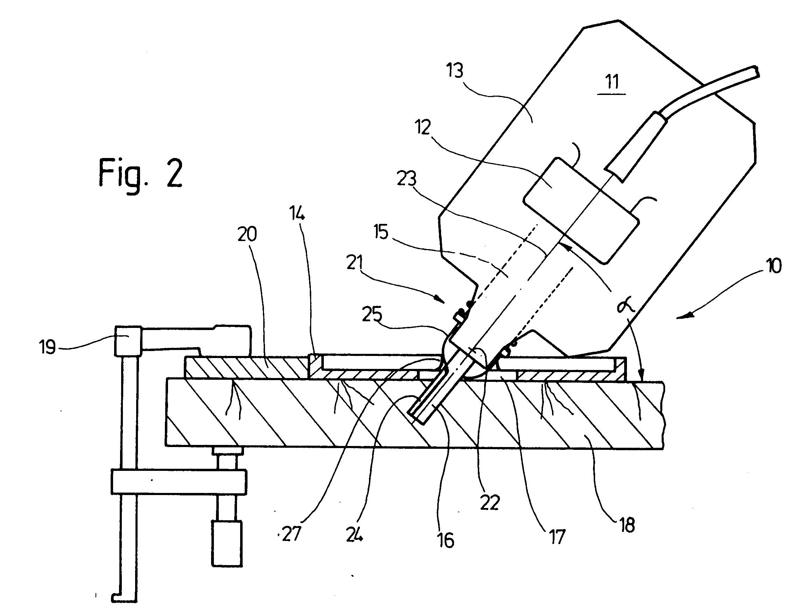

In Fig. 1-4 ist ein erstes Ausführungsbeispiel einer Handoberfräse 10 gezeigt, die aus einem Antriebsaggregat 11 mit Handgriff 12 am Motorgehäuse 13 und einer z. B. etwa rahmenförmigen Fußplatte 14 besteht. Das Antriebsaggregat 11 ist in üblicher Weise an zwei zueinander parallelen und in Abstand voneinander angeordneten Säulen 15,die an der Fußplatte 14 befestigt sind, relativ zur Fußplatte 14 höhen verstellbar gehalten. Die Fußplatte 14 enthält für den Durchgriff des Werkzeuges 16, insbesondere Fräsers, eine Offnung 17, die ausreichend groß dimensioniert ist. In Fig.2 ist schematisch ein Werkstück 18, z. B. eine Holzplatte, gezeigt, an der mittels Schraubzwinge 19 eine Führungsschiene 20 lösbar befestigt ist, entlang der die Handober fräse 10 mit der zugewandten Seite der Fußplatte 14 bewegt und dadurch geführt werden kann.

Die Handoberfräse 10 weist außerdem eine Schwenkeinrichtung 21 auf, mittels der das Antriebsaggregat 11 um eine Schwenk achse 22, die quer zur Längsmittelachse 23 des Antriebs aggregats 11 gerichtet ist, schwenkverstellbar und fest stellbar ist.

Die Schwenkeinrichtung 21 ist zwischen den beiden Säulen 15 einerseits und der Fußplatte 15 andererseits angeordnet. Mittels dieser Schwenkeinrichtung 21 sind somit das An triebsaggregat 11 und die Fußplatte 14 relativ zueinander um die Schwenkachse 22 schwenkverstellbar und feststellbar. Dies bedeutet, daß in der in Fig. 1 und 2 gezeigten Schwenk stellung die Fußplatte 14 auf dem Werkstück 18 nach wie vor aufliegt und bei horizontaler Abstützung des Werkstücks 18 wie dieses horizontal verläuft, während das Antriebsaggregat 11 mit seiner Längsmittelachse 23 in Bezug auf die Abstütz-ebene der Fußplatte 14 schräg verläuft und mit dieser bei der Einstellung gemäß Fig. 2 einen mit $\alpha$ bezeichneten spitzen Winkel einschließt. Die Größe des Winkels $\alpha$ ist vom Benutzer dem Bedarf entsprechend einstellbar. Diese besondere Ausbildung der Schwenkeinrichtung 21 macht es möglich, unter dem Winkel $\alpha$ schräg zur Oberfläche des Werkstückes 18 gerichtete Nuten 24 zu erzeugen, die beim Entlangführen längs der Führungsschiene 20 parallel zu dieser verlaufen. Derartige schräge Nuten 24 werden z. B. deswegen in Holzplatten eingearbeitet, um z. B. einen Fußschemel mit abgespreizten Seitenteilen in einfacher Weise herstellen zu können. Die Schwenkeinrichtung 21 ermöglicht also Fräsarbeiten mit schräg zur Oberfläche des Werkstückes 18 gerichtetem Werkzeug 16. Dieses kann z. B. aus einem einfachen Nutfräser bestehen. Damit hergestellte schräge Nuten ermöglichen die leichte Herstellung nicht rechtwinkliger Nutverbindungen zweier Platten, wie sie z. B. im Fensterbau, Modell bau od. dgl. benötigt werden. Auch Federnuten lassen sich leicht in jeder Winkellage anbringen, ohne das Werkzeug 16, insbesondere den Fräser, wechseln zu müssen. Es versteht sich, daß als Werkzeug 16 verschiedenartige zum Einsatz kommen können. So sind z. B. Formfräswerkzeuge, z. B. V-Nutfräser, Hohlkehlfräser od. dgl. einsetzbar, da bei geändertem Eingriffswinkel andere Nutformen erzeugbar sind. Auf diese Weise lassen sich z. B. Zierleisten mit beliebigem Profilquerschnitt herstellen. Die Restauration von antiken Gegenständen, z. B. Möbeln, ist ebenfalls ermöglicht, auch wenn ein speziell passender Formfräser als Werkzeug z. B. nicht (mehr) vorhanden ist. Von Vorteil ist auch, daß sich geschlossene Gratnuten mit einem einfachen Nutfräser als Werkzeug 16 herstellen lassen.

Nachfolgend sind Einzelheiten der Schwenkeinrichtung 21 erläutert. Wie Fig. 1 und 2 zeigen, verläuft die Schwenk achse 22 der Schwenkeinrichtung 21 durch die Längsmittelachse 23 des Antriebsaggregats 11 bzw. des Werkzeugs 16.

Die Schwenkeinrichtung 21 weist für jede Säule 15 ein Schwenk gelenk 25 auf, wobei die beiden Schwenkgelenke gleichartig gestaltet sind. Beim gezeigten Ausführungsbeispiel befindet sich das jeweilige Schwenkgelenk 25 am jeweiligen, an der Fußplatte 14 angreifenden Ende der zugeordneten Säule 15. Jedes Schwenkgelenk 25 weist zwei Gelenkteile 26 und 27 auf, die als gleichartig ausgebildete Gelenkhälften gestaltet sind. Der eine Gelenkteil 26 befindet sich am Ende der Säule 15 und ist mit dieser einstückig. Oer andere Gelenkteil 27 befindet sich an der Fußplatte 14 und ist mit dieser ein stückig. Oer Querschnitt jedes Gelenkteils 26, 27 beträgt in Achsrichtung des Gelenks gesehen etwa die Hälfte des Querschnitts der Säule 15, was für beide Gelenkteile 26 und 27 gleichermaßen gilt. Beide Gelenkteile 26 und 27 sind in Höhe der Schwenkachse 22 schwenkverstellbar und feststellbar. Sie greifen kraft- und/oder formschlüssig aneinander an und sichern auf diese Weise die jeweils ein gestellte Schwenklage. Beim gezeigten Ausführungsbeispiel weisen die Gelenkteile 26, 27 Scheiben auf. Sie sind in Richtung der Schwenkachse 22 schwenkbeweglich verbunden und zur Sicherung der eingestellten Schwenklage zusammen spannbar. An den miteinander in Berührung stehenden Flächen weisen beide scheibenförmige Gelenkteile 26 und 27 jeweils formschlüssig ineinandergreifende Vorsprünge 28 bzw. 29 auf, die bei diesem Ausführungsbeispiel als ineinandergreifende Zähne und dabei insbesondere als axial gerichtete Stirn zähne ausgebildet sind.

Die Verbindung beider Gelenkteile 26 und 27 jedes Schwenk gelenkes 25 erfolgt mittels eines Spannelementes 30, das in Richtung der Schwenkachse 22 verläuft und lösbar bzw. festspannbar ist. Das Spannelement 30 besteht beim ersten Ausführungsbeispiel aus einer Schraube, die z. B. in eine im einen Gelenkteil 27 enthaltene Gewindebohrung eingeschraubt wird und die mit Spiel eine im anderen Gelenkteil 26 enthaltene Bohrung durchsetzt, so daß beim Festziehen dieses Spannelementes 30 die Gelenkteile 26 und 27 in Richtung der Schwenkachse 22 fest zusammengespannt werden, wobei die Vorsprünge 28 bzw. 29 beider formschlüssig inein- andergreifen und die eingestellte Schwenklage und somit den eingestellten Winkel $\alpha$ sichern. Durch die Ausbildung der Gelenkteile 26 und 27 als Scheiben ergeben sich relativ große Flächen und somit große Vorsprünge 28, 29, die hier als axial gerichtete Stirnzähne ausgebildet sind, so daß jedes Schwenkgelenk 25 großflächip formschlüssig in der jeweiligen Schwenklage festlegbar ist und dadurch eine starre Kopplung zwischen der Fußplatte 14 einerseits und dem Antriebsaggregat 11 andererseits gewährleistet ist. Der Durchmesser der Scheiben 26, 27 entspricht etwa dem Querschnitt einer Säule 15, kann aber bei schweren Antriebsaggregaten auch größer sein. Soll die eingestellte Schwenklage verhindert werden, so wird jedes Spannelement 30 zumindest soweit gelöst, daß der form schlüssige Eingriff der Vorsprünge 28, 29 durch Relativverschiebung voneinander weg aufgehoben und eine neue Schwenklage eingestellt werden kann, die durch Festziehen der Spann elemente 30 wieder gesichert wird. Es versteht sich, daß als Spannelemente 30 die verschiedensten gängigen Mittel zum Einsatz kommen können.

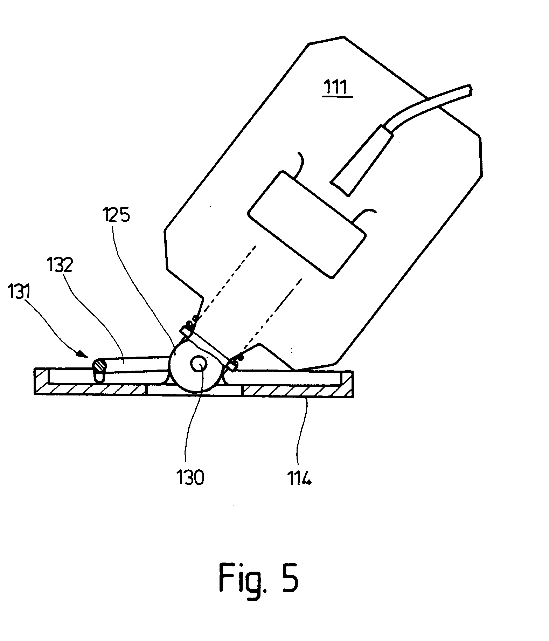

Bei dem in Fig. 5 gezeigten zweiten Ausführungsbeispiel sind für die Teile, die dem ersten Ausführungsbeispiel entsprechen, um 100 größere Bezugszeichen verwendet, so daß dadurch zur Vermeidung unnötiger Wiederholungen auf die Beschreibung des ersten Ausführungsbeispieles Bezug genommen ist. Beim zweiten Ausführungsbeispiel in Fig. 5 sind die Spannelemente 130 jedes Schwenkgelenks 125 mittels eines allen gemeinsamen, von Hand schwenkbaren Betätigungsgliedes 131 drehfest miteinander verbunden. Das Betätigungsglied 131 ist als Bügel 132 ausgebildet. Über den Bügel 132 sind beide Schwenkgelenke 125 zur Schwenkfreigabe lösbar und zum Fixieren in der eingestellten Schwenklage festziehbar. Der Bügel 132 liegt in der Fixierstellung, in der die Schwenklage fixiert ist und die in Fig. 5 gezeigt ist, auf der Fußplatte 114 auf. Zum Lösen der Schwenkgelenke 125 für die Schwenkfreigabe ist der Bügel 132 von Hand in Richtung zum Antriebsaggregat 111 hin hochschwenkbar. Das Spannelement 130 kann auch hier aus einer Schraube, einem Spannbolzen oder insbesondere einem Gewindestift od. dgl. bestehen.

Bei einem anderen, nicht gezeigten Ausführungsbeispiel befindet sich das Schwenkgelenk je Säule 15 in Abstand von der Fußplatte 14 und oberhalb dieser, wobei jede Säule 15 dann durch das Schwenkgelenk in zwei schwenkverstellbare Säulenteile unterteilt ist.

Bei einem anderen, ebenfalls nicht gezeigten Ausführungs beispiel weisen die Gelenkteile 26 und 27 jedes Schwenkgelenks 25 an den miteinander in Berührung stehenden Flächen Rauhigkeiten auf, z. B. Oberflächenrauhigkeiten, Reibbeläge od. dgl., die den Reibungsschluß bei festgezogenem Spannelement 30 erhöhen.

Bei einem anderen, ebenfalls nicht gezeigten Ausführungs beispiel sind die an den beiden Gelenkteilen 26 und 27 jedes Schwenkgelenkes 25 vorgesehenen Vorsprünge, die zur Fixierung der Schwenklage formschlüssig ineinandergreifen, als ineinandergreifende Zähne und hierbei als radial gerichtete Umfangszähne, ausgebildet. Diese radial gerichteten Umfangszähne sitzen dann an ineinandergreifenden Um fangssegmenten beider Gelenkteile 26, 27, die koaxial zu einander angeordnet sind.

Es versteht sich, daß als Schwenkgelenke 25 bzw. 125 auch anders gestaltete Gelenke im Rahmen der Erfindung liegen.

## Patentansprüche

1. Handoberfräse, mit einer mit parallelen Säulen (15) versehenen Fußplatte (14) sowie einem Antriebsaggregat (11), das an den Säulen (15) relativ zur Fußplatte (14) höhenverstellbar gehalten ist,und mit einer Schwenkeinrichtung (21), mittels der das Antriebsaggregat (11) um eine quer zu seiner Längsmittelachse (23) gerichtete Schwenkachse (22) schwenkverstellbar ist, **dadurch gekennzeichnet**, daß die Schwenkeinrichtung (21) zwischen den Säulen (15) einerseits und der Fußplatte (14; 114) andererseits angeordnet ist und mittels dieser das Antriebsaggregat (11; 111) und die Fußplatte (14; 114) relativ zueinander um die Schwenkachse (22) schwenkverstellbar sind.

2. Handoberfräse nach Anspruch 1, **dadurch gekennzeichnet**, daß das Antriebsaggregat (11, 111) und die Fußplatte (14, 114) in einer relativ zueinander gewählten Winkellage feststellbar sind.

3. Handoberfräse nach Anspruch 1 oder 2, **dadurch gekennzeichnet**, daß die Schwenkachse (22) der Schwenkeinrichtung (21) innerhalb der Ebene der Längsmittelachse (23) des Antriebsaggregats (11; 111) verläuft.

4. Handoberfräse nach einem der Ansprüche 1 - 3, **dadurch gekennzeichnet**, daß die Schwenkeinrichtung (21) je Säule (15) ein Schwenkgelenk (25; 125) aufweist.

5. Handoberfräse nach Anspruch 4, **dadurch ge-kennzeichnet**, daß das Schwenkgelenk je Säule (15) in Abstand von der Fußplatte (14, 114) vorgesehen ist und die Säule (15) in zwei schwenkverstellbare Säulenteile unterteilt.

6. Handoberfräse nach einem der Ansprüche 1 - 4, **dadurch gekennzeichnet**, daß die Schwenkeinrichtung (21) an jedem an der Fußplatte (14; 114) angreifenden Ende jeder Säule (15)unmittelbar über der Fußplatte ein Schwenkgelenk (25, 125) aufweist.

7. Handoberfräse nach einem der ansprüche 4 - 6, **dadurch gekennzeichnet**, daß jedes Schwenkgelenk (25; 125) zwei relenkteile (26, 27), z. B. einen am Säulenende befindlichen Gelenkteil (26) und einen an der Fußplatte (14;114) befindlichen Gelenkteil (27), aufweist, die miteinander schwenkverstellbar sind.

8. Handoberfräse nach Anspruch 7, **dadurch gekennzeichnet**, daß jeder Gelenkteil (26, 27) als Gelenkhälfte ausgebildet ist und die beiden Gelenkhälften jedes Schwenkgelenks (25,125) zumindest im wesentlichen gleichartip ausgebildet sind.

9. Handoberfräse nach Anspruch 7 oder 8, **dadurch gekennzeichnet**, daß der Querschnitt jedes Gelenkteils (26, 27) eines jeden Schwenkgelenks (25; 125) etwa dem Querschnitt einer Säule (15) entspricht.

10. Handoberfräse nach einem der Ansprüche 7 - 9, **dadurch gekennzeichnet**, daß der eine Gelenkteil (26) einstückig mit der Säule (15) und der andere Gelenkteil (27) einstückig mit der Fußplatte (14; 114) ist.

11. Handoberfräse nach einem der Ansprüche 4 -10, **dadurch gekennzeichnet**, daß die Gelenkteile (26, 27), insbesondere Gelenkhälften, jedes Schwenkgelenks (25; 125) kraft- und/oder formschlüssig aneinander angreifen und so die eingestellte Schwenklage sichern.

12. Handoberfräse nach Anspruch 11, **dadurch gekennzeichnet**, daß die Gelenkteile (26, 27) jedes Schwenkgelenks (25; 125) Scheiben aufweisen, die in Richtung der Schwenkachse (22) schwenkbeweglich verbunden und zur Sicherung der eingestellten Schwenklage zusammenspannbar sind.

13. Handoberfräse nach Anspruch 12, **dadurch gekennzeichnet**, daß die Scheiben den Reibungsschluff an den miteinander in Berührung stehenden Flächen erhöhende Rauhigkeiten aufweisen, z. B. Oberflächenrauhigkeiten, Reibbeläge od. dgl..

14. Handoberfräse nach Anspruch 12, **dadurch gekennzeichnet**, daß die Gelenkteile (26, 27), insbesondere Scheiben, an den miteinander in Berührung stehenden Flächen formschlüssig ineinandergreifende Vorsprünge (28, 29) aufweisen.

15. Handoberfräse nach Anspruch 14, **dadurch gekennzeichnet**, daß die Vorsprünge (28, 29 ) als ineinandergreifende Zähne, insbesondere axial gerichtete Stirnzähne oder radial gerichtete Umfangszähne, ausgebildet sind.

16. Handoberfräse nach Anspruch 15, **dadurch gekennzeichnet**, daß die radial gerichteten Umgangszähne an ineinandergreifenden Umfangssegmenten angeordnet sind, die zueinander koaxial verlaufen.

17. Handoberfräse nach einem der Ansprüche 12 - 16, **dadurch gekennzeichnet**, daß die Verbindung beider Gelenkteile (26, 27) jedes Schwenkgelenks (25; 125) mittels eines in Richtung der Schwenkachse (22) verlaufenden lösbaren Spannelements (30; 130) erfolgt.

18. Handoberiräse nach Anspruch 17, **dadurch gekennzeichnet**, daß das Spannelement (30; 130) als Spannbolzen, z. B. Schraube, Gewindestift od. dgl., ausgebildet ist.

19. Handoberfräse nach Anspruch 18, **dadurch gekennzeichnet**, daß die Spannelemente (130) aller Schwenkgelenke (125) mittels eines allen gemeinsamen, von Hand schwenkbaren Betätigungsgliedes (131) drehfest miteinander verbunden und über dieses zur Schwenkfreigabe der Schwenkgelenke (125) lösbar bzw. zum Fixieren der eingestellten Schwenklage festziehbar sind.

20. Handoberfräse nach Anspruch 19, **dadurch gekennzeichnet**, daß das Betätigungsglied (131) aus einem Bügel (132) gebildet ist.

21. Handoberfräse nach Anspruch 19 oder 20, **dadurch gekennzeichnet**, daß das Betätigungsglied (131), insbesondere der Bügel (132), in der Fixierstellung auf der Fußplatte (114) aufliegt und zum Lösen in Richtung zum Antriebsaggregat (111) hochschwenkbar ist.

Fig. 1

Fig. 3

Fig. 4

Fig. 2

Fig. 5

Europäisches
Patentamt

# EUROPÄISCHER RECHERCHENBERICHT

Nummer der Anmeldung

EP 91 11 1371

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 655 653 (HALL)<br>* Spalte 4, Zeilen 10-21,46-52; Spalte 5, Zeilen 25-27; Figuren 1,4,5,6 * | 1-8,11, 12,14, 17,18 | B 27 C 5/10 |
| Y | | 9,10,13 ,15,16 | |
| Y | GB-A-2 196 571 (WILLIAMS)<br>* Seite 1, Zeile 128 - Seite 2, Zeile 11; Figur 1 * | 9,10 | |
| A | | 1,12 | |
| Y | US-A-3 740 791 (BULIN)<br>* Spalte 2, Zeilen 36-43; Figur 1 * | 13 | |
| Y | US-A-4 880 331 (ZUN)<br>* Figur 1 * | 15,16 | |
| A | | 14 | |
| A | US-A-4 671 478 (SCHOENIG)<br>* Figur 7 * | 15 | |
| A | FR-A-2 359 686 (CONCORD MECCANICA RE-GI)<br>* Figuren 1,2 * | 19 | RECHERCHIERTE SACHGEBIETE (Int. Cl.5)<br><br>B 27 C<br>B 27 F<br>B 23 Q<br>F 16 C<br>B 27 B |
| A | DE-C- 940 425 (REICH) | | |

Der vorliegende Recherchenbericht wurde für alle Patentansprüche erstellt

| Recherchenort | Abschlußdatum der Recherche | Prüfer |
|---|---|---|
| DEN HAAG | 06-09-1991 | MATZDORF U.H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)